# EUROPÄISCHE PATENTSCHRIFT

(11) **EP 3 303 890 B1**
(45) Veröffentlichungstag und Bekanntmachung des Hinweises auf die Patenterteilung: **02.10.2019**
(21) Anmeldenummer: 16723732.0
(22) Anmeldetag: 17.05.2016
(51) Int. Cl.: F16K 37/00, F16K 7/12

(54) **VERFAHREN ZUM BETREIBEN EINES MEMBRANVENTILS, SOWIE SYSTEM UND AUSLESEEINRICHTUNG**
METHOD FOR OPERATING A DIAPHRAGM VALVE, SYSTEM AND READING DEVICE
PROCÉDÉ POUR FAIRE FONCTIONNER UNE VANNE À MEMBRANE, AINSI QUE SYSTÈME ET DISPOSITIF DE LECTURE

(30) Priorität: 02.06.2015 DE 102015210204
(43) Veröffentlichungstag der Anmeldung: 11.04.2018
(73) Patentinhaber: GEMÜ Gebr. Müller Apparatebau GmbH & Co. Kommanditgesellschaft, 74653 Ingelfingen (DE)
(72) Erfinder: MUELLER, Gert, 74653 Kuenzelsau (DE); BRIEN, Joachim, 89558 Boehmenkirch (DE); FLOEGEL, Werner, 74677 Doerzbach (DE)
(74) Vertreter: DREISS Patentanwälte PartG mbB
(86) Internationale Anmeldenummer: PCT/EP2016/060975
(87) Internationale Veröffentlichungsnummer: WO 2016/192970

(56) Entgegenhaltungen:
- US-A1- 2003 001 590
- US-A1- 2005 092 079
- US-A1- 2008 202 606

## Beschreibung

Die Erfindung betrifft ein Verfahren zum Betreiben eines Membranventils nach dem Oberbegriff des Anspruchs 1. Gegenstand der vorliegenden Erfindung sind ferner ein System sowie eine Ausleseeinrichtung.

Die DE 10 2013 214 304 A1 beschreibt ein Membranventil mit einer Ventilmembran, an der ein Datenträger in Form eines RFID-Chips vorhanden ist. So können nicht nur Daten betreffend die Materialien, die Abmessungen, die Herstellung und ähnliche Kerngrößen der Membran in dem Datenträger abgespeichert und/oder digital im System referenziert werden, sondern auch Daten betreffend den jeweiligen Kunden, die Lieferung, usw. All diese Daten können auf die jeweilige einzelne individuelle Membran ausgerichtet sein und auf deren zugehörigem Datenträger abgespeichert werden. Die US 2008/0202606 A1 offenbart ein Membranventil mit einer Ventilmembran, in oder an der ein Sensor angeordnet ist.

Ausgehend hiervon hat die vorliegende Erfindung die Aufgabe, ein Verfahren zum Betreiben eines Membranventils zu schaffen, welches die Betriebssicherheit erhöht und die Betriebskosten senkt.

Diese Aufgabe wird durch ein Verfahren mit den Merkmalen des Anspruchs 1 sowie durch ein unter anderem ein Membranventil und ein Auslesegerät umfassendes System und eine Auslesegerät mit den Merkmalen der entsprechenden nebengeordneten Ansprüche gelöst. Vorteilhafte Weiterbildungen der Erfindung sind in Unteransprüchen angegeben. Für die Erfindung wichtige Merkmale finden sich darüber hinaus in der nachfolgenden Beschreibung sowie in der beiliegenden Zeichnung, wobei diese Merkmale sowohl in Alleinstellung als auch in ganz unterschiedlichen Kombinationen für die Erfindung wichtig sein können, ohne dass hierauf nochmals extra hingewiesen werden wird.

Erfindungsgemäß wird die Identifikation einer kompletten Ventilstruktur, also einer Gesamtkomponente, anhand der ausgelesenen Daten ermöglicht. Dabei müssen lokal beim Membranventil die entsprechenden Daten nicht vorgehalten werden. Vielmehr sind lediglich einige Daten auf dem in das Membranventil integrierten Datenspeicher vorhanden, andere Daten dagegen sind bei der entfernt angeordneten Verarbeitungseinrichtung vorhanden.

Die im integrierten Datenspeicher des Membranventils vorhandenen Daten werden bei Bedarf ausgelesen und vorgehalten und an die entfernt von der Ausleseeinrichtung und vom Membranventil angeordnete Verarbeitungseinrichtung übersandt und mit den dort vorhandenen Daten bedarfsgerecht synchronisiert. "Synchronisieren" bedeutet, dass die zumindest zunächst an unterschiedlichen Orten vorhandenen Daten für ein bestimmtes Membranventil zu einem zusammengehörenden Datensatz zusammengeführt bzw. miteinander verknüpft werden. Da die Daten an unterschiedlichen Orten vorliegen, wird eine erhebliche Steigerung der Datensicherheit erreicht. Die Gesamtheit der Daten kann eine solche sein, die eine umfassende Charakterisierung des Membranventils und aller Unterkomponenten des Membranventils möglich macht. Es wird also eine Art "elektronische Identität" des Membranventils ermöglicht, wobei die Daten dieser elektronischen Identität erst durch die entfernt angeordnete Verarbeitungseinrichtung mosaikartig miteinander verknüpft bzw. synchronisiert werden.

Zu der Erfindung gehört auch, dass die bei der Verarbeitungseinrichtung vorhandenen Daten mindestens eine Eigenschaft der Ventilmembran des Membranventil und/oder mindestens eine Eigenschaft einer Komponente des Membranventils, die nicht die Ventilmembran ist, und/oder mindestens eine Eigenschaft des Membranventils charakterisieren. Damit können praktisch alle wesentlichen und zur Bildung einer elektronischen Identität erforderlichen Parameter von der Ausleseeinrichtung und vom Membranventil entfernt bereitgestellt werden.

Es versteht sich, dass das erfindungsgemäße Verfahren grundsätzlich nicht nur zum Betreiben eines Membranventils geeignet ist, sondern im Betrieb jeglicher Art von Ventilen sowie elektrischen Geräten oder sonstigen Einrichtungen zur Ventilsteuerung vorteilhaft ist.

Eine für den Betreiber des Membranventils im Hinblick auf die Datensicherheit besonders interessante alternative Variante des Verfahrens besteht darin, dass lediglich der Datenspeicher (und nicht zwingend die Verarbeitungseinrichtung) von der Ausleseeinrichtung und vom Membranventil entfernt angeordnet ist, und dass nach dem Auslesen der Daten aus dem in das Membranventil integrierten Datenspeicher die Daten aus dem entfernt angeordneten Datenspeicher an die Ausleseeinrichtung übertragen und dort mit den aus dem integrierten Datenspeicher ausgelesenen Daten verknüpft bzw. synchronisiert, und gegebenenfalls auch dort verarbeitet) werden.

In einer ersten Weiterbildung wird vorgeschlagen, dass im Schritt a die Daten an eine bei dem Hersteller oder Lieferanten des Membranventils vorhandene Verarbeitungseinrichtung übermittelt werden. Die Verarbeitungseinrichtung ist somit nicht nur entfernt von der Ausleseeinrichtung und vom Membranventil angeordnet, sondern entfernt vom Betreiber des Membranventils. Dies erhöht nochmals die Datensicherheit. Darüber hinaus werden hierdurch auch Kosten beim Betreiber des Membranventils gespart, da der Hersteller oder Lieferant des Membranventils ohnehin über Daten verfügt, die das Membranventil betreffen, und diese somit nicht beim Betreiber vorgehalten werden müssen.

Weiterhin wird vorgeschlagen, dass die Daten mittels einer mobilen Ausleseeinrichtung, insbesondere mittels eines Smartphones oder eines Tablet PCs / Smart Tablets, ausgelesen werden. Dies vereinfacht die Durchführung des erfindungsgemäßen Verfahrens. Gleiches gilt für jene Ausgestaltung des Verfahrens, bei der die Daten drahtlos ausgelesen werden.

Besonders vorteilhaft aber selbstverständlich optional ist es auch, wenn aus dem integrierten Datenspeicher auch Daten ausgelesen werden, welche mindestens eine Eigenschaft einer Komponente, die nicht die Ventilmembran ist, und/oder eine Betriebseigenschaft des Membranventils charakterisieren. Damit wird der Bereich der Daten, die unmittelbar am bzw. im Membranventil gespeichert sind, erheblich erweitert. Insbesondere jene Daten, die eine Betriebseigenschaft des Membranventils charakterisieren, können jedoch vertraulich sein, da sie den beim Betreiber des Membranventils durchgeführten Verfahrensprozess zumindest teilweise beschreiben. Indem gerade diese Daten im Membranventil vorhanden sind, bleibt gewährleistet, dass diese Daten nicht unbeabsichtigt Dritten zugänglich werden. Grundsätzlich möglich ist aber auch, dass diese Daten entfernt vom Membranventil, beispielsweise bei der Verarbeitungseinrichtung gespeichert werden.

Die Daten, welche oben erwähnt wurden, können mindestens ein Datum aus der folgenden Gruppe umfassen: Typ, Material, Ventilantrieb, Herstellungsdatum, Herstellungsort, Herstellungscharge, Qualitätsprüfgrößen, Lieferant, Lieferweg, Lagerort, Lagerdauer, Einlagerdatum, Auslagerdatum, Einbaudatum, Einbauort, Name des Monteurs, und Name des Betreibers. Beispielsweise unter den Qualitätsprüfgrößen werden solche Größen verstanden, die bei und/oder nach der Herstellung der Ventilmembran und/oder anderer Komponenten des Membranventils zur Qualitätssicherung erfasst werden, konkret zum Beispiel gemessene Toleranzen, Rauhtiefen, Abmessungen, etc..

Jene Daten, welche eine Betriebseigenschaft des Membranventils charakterisieren, können ein Datum aus der folgenden Gruppe umfassen: Fluidtyp, Fluiddruck, Fluidtemperatur, Anzahl der Schaltzyklen, Betriebszeit, Schaltfrequenz, etc. Dies sind wesentliche den Lebenslauf des Membranventils und/oder seiner Komponenten charakterisierende Parameter, die somit eine genaue Darstellung des aktuellen Zustands des Membranventils und/oder der Ventilmembran und/oder anderer Unterkomponenten des Membranventils gestattet.

Besonders vorteilhaft ist es, wenn bei einem Initialisieren eines Ventilantriebs eine aktuelle Membrandicke ermittelt und vorzugsweise zusammen mit dem Ermittlungsdatum auf dem integrierten Datenspeicher gespeichert wird und/oder an die Verarbeitungseinrichtung (bspw. zur dortigen Speicherung) übermittelt wird. Damit wird ein zentrales, eine Eigenschaft der Ventilmembran charakterisierendes Datum laufend bei jedem Initialisieren erzeugt, wodurch die Gesamtheit der Daten einen besonders aktuellen Zustand des Membranventils charakterisieren.

Vorgeschlagen wird ferner, dass bei einer Wartung des Membranventils mindestens eine den aktuellen Zustand der Ventilmembran charakterisierende Größe ermittelt und auf dem Datenspeicher gespeichert und/oder an die Verarbeitungseinrichtung übermittelt wird. Diese Größe kann beispielsweise von einer Person, die die Wartung durchführt, anhand objektiver Kriterien, also beispielsweise anhand von Messungen, oder anhand von subjektiver Kriterien, also beispielsweise einer Sichtinspektion, ermittelt bzw. bestimmt werden. Auch dies vervollständigt und optimiert das Gesamtbild, welches aus der Gesamtheit der zur Verfügung gestellten Daten vom Zustand des Membranventils geschaffen wird.

Eine besonders bevorzugte Weiterbildung des erfindungsgemäßen Verfahrens zeichnet sich dadurch aus, dass es ferner folgende Schritte umfasst:
c. Verarbeiten der synchronisierten Daten in der Verarbeitungseinrichtung;
d. Ermitteln einer Aktion durch die Verarbeitungseinrichtung abhängig vom Ergebnis der Verarbeitung.

Hierdurch wird die Funktionalität des erfindungsgemäßen Verfahrens erweitert, indem automatisch eine Aktion ausgelöst wird auf der Basis des Ergebnisses der Verarbeitung der Gesamtdaten, die aus den übermittelten Daten und den bei der Verarbeitungseinrichtung vorhandenen Daten bestehen.

Beispielsweise kann die Verarbeitungseinrichtung im Schritt c einen wahrscheinlichen Verschleißzustand, insbesondere der Ventilmembran, ermitteln. Hierdurch wird die Betriebssicherheit des Membranventils erheblich verbessert.

Dabei kann die Aktion im Schritt d mindestens eine Aktion aus der folgenden Gruppe umfassen: automatisches Erstellen und/oder Übermitteln einer Statusinformation und/oder einer Ersatzteilanforderung und/oder einer Warninformation. Hierdurch wird die Betriebssicherheit des Membranventils und der Anlage, in die das Membranventil eingebaut ist, nochmals verbessert, und gegebenenfalls werden Betriebsunterbrechungen, die zur Wartung und/oder Reparatur des Membranventils notwendig sind, auf ein Minimum reduziert, und zwar sowohl im Hinblick auf die Anzahl als auch im Hinblick auf die Dauer.
Dabei ist es möglich, dass die Statusinformation und/oder die Warninformation an die Ausleseeinrichtung übermittelt und dort angezeigt werden/wird. Damit erhält die Bedienperson vor Ort, die sich also beim Membranventil befindet, sofort einen umfassenden Überblick, so dass sie gegebenenfalls weitere Maßnahmen ergreifen kann, die die Betriebssicherheit des Membranventils und der Anlage, in die das Membranventil eingebaut ist, erhöhen. Die Statusinformation kann beispielsweise eine wahrscheinliche Restlaufzeit des Membranventils bzw. der Ventilmembran umfassen, und/oder die Warninformation kann auf ein drohendes Ventilversagen hinweisen.

Zusammenfassend lässt sich also sagen, dass es die vorliegende Erfindung gestattet, die für eine effiziente Qualitätssicherung und Wartung erforderlichen Informationen schnell, sicher und aktuell zu erzeugen. Beispielsweise können die Daten, die eine Betriebseigenschaft des Membranventils charakterisieren, auf dem integrierten Speicher abgespeichert sein, wohingegen jene Daten, die bei der Herstellung der Ventilmembran bzw. des Membranventils erzeugte Größen charakterisieren, bei der entfernt vom Membranventil vorhandenen Verarbeitungseinrichtung abgespeichert sind. Durch die Gesamtheit der Daten wird dem Betreiber des Membranventils eine einfache Möglichkeit zur Nachverfolgung des Lebenslaufs des Membranventils und seiner Komponenten geboten, ohne dass er selbst sämtliche Daten vorhalten muss, und ohne dass sensible und den Betrieb des Membranventils charakterisierende Daten unbeabsichtigt nach außen gehen.

Erreicht wird dies dadurch, dass die beim Membranventil abgespeicherten Daten erst durch die externe Verarbeitungseinrichtung mit den dort vorhandenen Daten synchronisiert werden. Die Erfindung schafft also eine Verbindung zwischen den beim Betreiber bzw. Nutzer des Membranventils vorhandenen Daten den beim Hersteller und/oder Lieferanten des Membranventils vorhandenen Daten.

Nachfolgend wird eine Ausführungsform der vorliegenden Erfindung beispielhaft unter Bezugnahme auf die beiliegende Zeichnung erläutert. In der Zeichnung zeigen:
Figur 1 eine perspektivische Explosionsdarstellung eines Membranventils mit einer Ventilmembran und zwei Datenspeichern, sowie symbolisch eine verfahrenstechnische Anlage, in die das Membranventil eingebaut ist;
Figur 2 eine schematische Darstellung eines Systems, umfassend das Membranventil, eine Ausleseeinrichtung, eine Übermittlungseinrichtung und eine Verarbeitungseinrichtung; und
Figur 3 ein Flussdiagramm eines Verfahrens zum Betreiben des Membranventils von Figur 1.

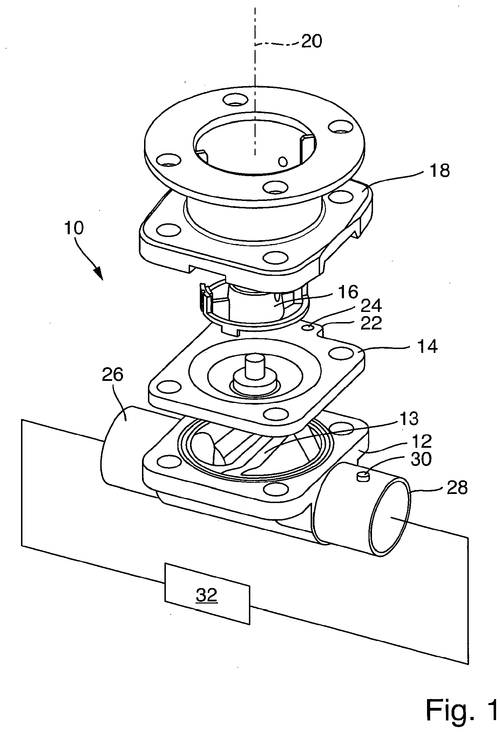

In Figur 1 trägt ein Membranventil insgesamt das Bezugszeichen 10. Es umfasst einen Ventilkörper 12 mit einer Sitzgeometrie 13, eine Ventilmembran 14, ein Druckstück 16 und ein Zwischenstück 18. Die Ventilmembran 14 ist zwischen Ventilkörper 12 und Zwischenstück 18 verklemmt. Das Druckstück 16 dient zur Verbindung der Ventilmembran 14 mit einem Ventilantrieb 20, der in Figur 1 lediglich durch eine strichpunktierte Linie angedeutet ist, und dient auch der formschlüssigen Dichtfunktion.

An dem in Figur 1 hinteren Rand der Ventilmembran 14 ist eine Lasche 22 vorhanden, in die ein Datenspeicher 24 in Form eines RFID-Chips integriert ist. Der Ventilkörper 12 umfasst einen Einlassstutzen 26 und einen Auslassstutzen 28. Auf dem Auslassstutzen 28 ist ebenfalls ein Datenspeicher 30 in Form eines RFID-Chips angeordnet. Bei einer nicht dargestellten Ausführungsform sind auch am Ventilkörper und/oder am Einlassstutzen Datenspeicher vorhanden. Die Ventilkörper können sich beispielsweise im Hinblick auf die Sitzgeometrie unterscheiden. Dann kann jeder Ventilkörper einen der speziellen Sitzgeometrie zugeordneten Datenspeicher aufweisen.

Das Membranventil 10 ist in eine verfahrenstechnische Anlage 32 eingebaut, die vorliegend lediglich symbolisch durch einen gezeichneten Kasten 32 angedeutet ist. Als verfahrenstechnische Anlage kommt beispielsweise eine Anlage in der pharmazeutischen Industrie zur Herstellung eines Medikaments infrage.

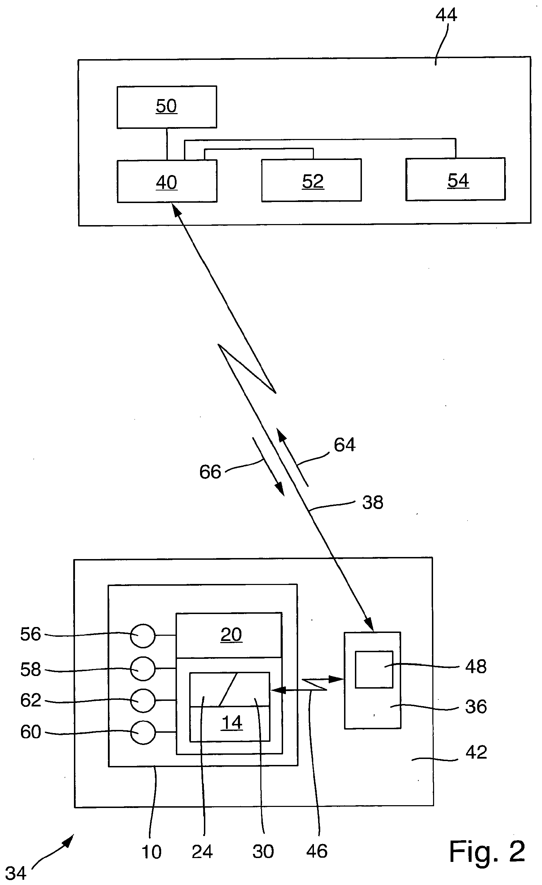

In Figur 2 trägt ein System, welches unter anderem auch das Membranventil 10 aus Figur 1 umfasst, insgesamt das Bezugszeichen 34. Zu dem System 34 gehört ferner eine Ausleseeinrichtung 36 zum Auslesen von auf dem Datenspeicher 24 und dem Datenspeicher 30 gespeicherten Daten, ferner eine Übermittlungseinrichtung 38 zum Übermitteln der ausgelesenen Daten an eine entfernt von der Ausleseeinrichtung 36 und von dem Membranventil 10 angeordnete Verarbeitungseinrichtung 40, die ebenfalls zu dem System 34 gehört. Der Datenspeicher 24, der Datenspeicher 30, die Ausleseeinrichtung 36, die Übermittlungseinrichtung 38 und die Verarbeitungseinrichtung 40 sind zur Durchführung eines Verfahrens eingerichtet und programmiert, welches im Detail weiter unten erläutert werden wird.

Wie aus Figur 2 ersichtlich ist, sind das Membranventil 10 und die Ausleseeinrichtung 36 bei einem Unternehmen 42 angeordnet, welches die verfahrenstechnische Anlage 32 betreibt. Die Verarbeitungseinrichtung 40 ist dagegen bei einem Hersteller 44 (oder zumindest einem Lieferanten) des Membranventils 10 angeordnet. Sie kann grundsätzlich aber auch bei einem sonstigen Dienstleister angeordnet sein.

Die Ausleseeinrichtung 36 ist eingerichtet und programmiert, um drahtlos Daten aus den RFID-Chips 24 und 30 auszulesen, was durch einen Pfeil 46 angedeutet ist. Sie verfügt über eine Anzeige 48. Diese kann dazu verwendet werden, ausgelesenen Daten anzuzeigen, sie kann aber auch eingesetzt werden, um Kommandos oder Daten anzuzeigen, die von der Ausleseeinrichtung 36 an einen der RFID-Chips 24 oder 30 oder auch an beide RFID-Chips 24 und 30 übertragen werden sollen. Bei der hier gezeigten Ausführungsform ist die Ausleseeinrichtung 36 also nicht nur eingerichtet und programmiert, um Daten auszulesen, sondern auch dazu, Daten zu den RFID-Chips 24 und 30 zu übertragen, so dass sie dort gespeichert werden können.

Bei der Ausleseeinrichtung 36 kann es sich um ein spezielles Gerät handeln, welches ausschließlich für eine Anwendung im Zusammenhang mit dem Membranventil 10 vorgesehen ist. In diesem Fall kann es sich bei der Anzeige 48 auch einfach um eine LED-Anzeige handeln. Möglich ist aber auch, dass es sich bei der Ausleseeinrichtung 36 um ein handelsübliches Smartphone oder einen handelsüblichen Tablet PC oder ein Smart Tablet handelt, und dass die Anzeige 48 durch das Display des Smartphones gebildet wird.

Zur Datenkommunikation zwischen den RFID-Chips 24 und 30 und der Ausleseeinrichtung 36 kann beispielsweise die NFC-Technik oder eine andere Drahtlostechnologie eingesetzt werden, und es können die üblichen hierzu erforderlichen Schnittstellen verwendet werden, welche eine solche Datenkommunikation ermöglichen.

Bei der beim Hersteller 44 des Membranventils 10 vorhandenen Verarbeitungseinrichtung 40 ist ebenfalls ein Datenspeicher 50 vorhanden, der mit der Verarbeitungseinrichtung 40 gekoppelt ist. Ferner sind mit der Verarbeitungseinrichtung 40 bestimmte Aktionsmodule verbunden, von denen in Figur 2 zwei beispielhaft dargestellt sind, nämlich ein Aktionsmodul 52, durch den eine automatische Ersatzteilanforderung generiert werden kann, sowie ein Aktionsmodul 54, durch den eine automatische Wartungsanforderung generiert werden kann. Weitere nicht dargestellte Aktionsmodule, die mit der Verarbeitungseinrichtung 40 verbunden sind, können zum automatischen Generieren einer Statusinformation betreffend das Membranventil 10 dienen und/oder zum automatischen Generieren einer Warninformation, ebenfalls betreffend das Membranventil 10.

Jene Daten, die bei der Verarbeitungseinrichtung 40 im Datenspeicher 50 gespeichert sind, sind vorzugsweise solche, welche bei der Herstellung des Membranventils 10 erzeugt wurden. Sie können die Ventilmembran 14, eine andere Komponente als die Ventilmembran 14 oder das Membranventil 10 insgesamt betreffen. Die gespeicherten Daten können eine beliebige Eigenschaft charakterisieren, beispielsweise einen Typ des Membranventils 10, einen Typ der Ventilmembran 14, einen Typ des Ventilantriebs 20, ein Material des Ventilkörpers 12, ein Material der Ventilmembran 14, ein Herstellungsdatum des Ventilkörpers 12, ein Herstellungsdatum der Ventilmembran 14, ein Herstellungsdatum des Ventilantriebs 20, ein Zusammenbaudatum von Ventilkörper 12, Ventilmembran 14, Druckstück 16, Zwischenstück 18 und Ventilantrieb 20, einen Herstellungsort der Unterkomponenten oder des gesamten Membranventils 10, eine Herstellungscharge beispielsweise der Ventilmembran 14, bestimmte Qualitätsprüfgrößen wie Toleranzen, Rauhtiefen, Abmessungen, Ergebnisse von Sichtinspektionen, etc.

Zu den Daten, die bei der Verarbeitungseinrichtung 40 gespeichert sind, können auch solche gehören, die einen Wartungsplan betreffen bzw. definieren, einen Workflow bei einer bestimmten Betriebssituation oder bei einem bestimmten Wartungsfall, einen Fehlerkatalog, eine Bilddokumentation zu dem Membranventil 10, sowie weitere ähnlich gelagerte Informationen.

Zu den Eigenschaften, die durch die gespeicherten Daten charakterisiert werden können, gehören auch Namen von Unterlieferanten, Informationen betreffend den Lieferweg, Informationen betreffend einen Lagerort sowie eine Lagerdauer, vorzugsweise auch betreffend das Einlagerdatum und das Auslagerdatum, und dies alles sowohl von Unterkomponenten als auch des gesamten Membranventils 10. Auch das Datum, an dem das Membranventil 10 in die verfahrenstechnische Anlage 32 eingebaut wurde, der Name des Monteurs, der das Membranventil 10 eingebaut hat, und der Name des Betreibers sowie ähnliche Informationen können zu den besagten Eigenschaften gehören.

Mindestens einige der oben bezeichneten Daten können auch eine Eigenschaft der Ventilmembran 14 charakterisieren und in dem integrierten Datenspeicher 24 der Ventilmembran 14 abgespeichert sein. Ferner können die in dem integrierten Datenspeicher 24 der Ventilmembran 14 abgespeicherten Daten auch eine Betriebseigenschaft des Membranventils 10 charakterisieren. Eine solche Betriebseigenschaft ist beispielsweise der Typ bzw. die Zusammensetzung des Fluids, welches durch das Membranventil 10 strömt bzw. von diesem geschaltet wird, die Temperatur dieses Fluids, die Anzahl und Frequenz der Schaltzyklen, die kumulierte Betriebszeit, etc.

Diese Daten können entweder mithilfe der Ausleseeinrichtung 36 von einer Bedienperson "manuell" in den Datenspeicher 24 eingespeichert werden, oder sie können zumindest zum Teil durch in das Membranventil 10 und/oder die verfahrenstechnische Anlage 32 integrierte Sensoren erfasst und automatisch an den Datenspeicher 24 übertragen und in diesem gespeichert werden. Derartige Sensoren sind in Figur 2 angedeutet und mit dem Bezugszeichen 56 (Temperatur), 58 (Druck), 60 (Betriebszeit) und 62 (Anzahl der Schaltzyklen und Frequenz der Betätigungen) versehen.

Bestimmte Eigenschaften können auch im Betrieb des Membranventils 10 auf andere Art und Weise aktuell bestimmt werden. Beispielsweise ist es möglich, dass bei einem Initialisieren des Ventilantriebs 20 eine aktuelle Membrandicke der Ventilmembran 14 ermittelt wird. Dies kann beispielsweise dadurch erfolgen, dass der Ventilantrieb 20 langsam so weit zugesteuert wird, bis die Ventilmembran 14 an einem Ventilsitz des Ventilkörpers 12 in Anlage kommt, und dass der entsprechende Weg des Ventilantriebs 20 erfasst wird. Die ermittelte aktuelle Membrandicke kann dann ebenfalls manuell oder automatisch beispielsweise im Datenspeicher 24 abgespeichert werden.

Auch ist es möglich, dass bei einer Wartung des Membranventils 10 beispielsweise im Rahmen einer Sichtinspektion durch eine Bedienperson ein aktueller Zustand der Ventilmembran 14 ermittelt wird. Hierzu kann die Bedienperson beispielsweise über einen Katalog möglicher typisierter optischer Erscheinungen an der Ventilmembran 10 verfügen, so dass die Bedienperson das Aussehen der aktuellen Ventilmembran 14 mit den dargestellten typisierten optischen Erscheinungen vergleichen und hieraus bestimmen kann, dass die tatsächliche Ventilmembran 14 am ehesten einem bestimmten der typisierten Erscheinungsbilder entspricht. Eine dem Erscheinungsbild entsprechende Codenummer kann dann beispielsweise über die Ausleseeinrichtung 36 an den Datenspeicher 24 zum Abspeichern übermittelt werden.

Die Übermittlungseinrichtung 38 kann, wie in Figur 2 dargestellt ist, eine bidirektionale Übermittlungseinrichtung sein, die also Daten bzw. Informationen sowohl von der Ausleseeinrichtung 36 zur Verarbeitungseinrichtung 40 (Pfeil 64) als auch von der Verarbeitungseinrichtung 40 zur Ausleseeinrichtung 36 (Pfeil 66) übertragen kann. Grundsätzlich denkbar ist aber auch, dass die Übermittlungseinrichtung 38 nur unidirektional arbeitet, beispielsweise lediglich Daten entsprechend dem Pfeil 64 von der Ausleseeinrichtung 36 zur Verarbeitungseinrichtung 40 hin überträgt.

Auf der Basis der Gesamtheit der vorhandenen Daten, also den aus dem integrierten Datenspeicher 24 ausgelesenen und übermittelten Daten und den hiermit synchronisierten bei der Verarbeitungseinrichtung 40 vorhandenen Daten kann dann in der Verarbeitungseinrichtung 40 eine Verarbeitung dieser Gesamtheit der vorhandenen Daten erfolgen, und abhängig vom Ergebnis dieser Verarbeitung wird dann eine Aktion ermittelt. Beispielsweise kann die Verarbeitung darin bestehen, dass ein aktueller Verschleißzustand der Ventilmembran 14 ermittelt wird.

Abhängig von einem solchen aktuellen Verschleißzustand kann dann als Aktion automatisch eine Statusinformation erzeugt und über die Übermittlungseinrichtung 38 an die Ausleseeinrichtung 36 übermittelt und dort an der Anzeige 48 zur Anzeige gebracht werden. Abhängig vom aktuellen Verschleißzustand und weiteren relevanten Daten kann mittels eines entsprechenden Algorithmus auch eine wahrscheinliche Restlaufzeit ermittelt werden. Liegt diese unterhalb eines Grenzwerts, droht ein Ventilversagen, und es kann eine entsprechende Warninformation erzeugt und ebenfalls mittels der Übermittlungseinrichtung 38 an die Ausleseeinrichtung 36 übermittelt und dort an der Anzeige 48 angezeigt werden. Zusätzlich kann in einem solchen Fall auch noch ein akustisches Signal an der Ausleseeinrichtung 36 erzeugt werden, welches die Bedienperson auf die Dringlichkeit einer Maßnahme hinweist.

Abhängig von einem solchen aktuellen Verschleißzustand kann im Aktionsmodul 54 eine Wartungsanforderung erzeugt werden, und im Aktionsmodul 52 kann gleich das entsprechende Ersatzteil, beispielsweise eine neue Ventilmembran 14, angefordert werden.

Während in dem RFID-Chip 24 der Ventilmembran 14 vorwiegend solche Daten gespeichert sind, welche die Ventilmembran 14 betreffen, sind in dem RFID-Chip 30 des Ventilkörpers 12 eher solche Daten gespeichert, welche den Ventilkörper 12 betreffen. An sich kann jedes wesentliche Einzelteil des Membranventils 10 mit einem Datenspeicher, beispielsweise in Form eines RFID-Chips, ausgestattet sein, auf dem dann die dieses spezielle Bauteil betreffenden Daten abgespeichert sind. Denkbar ist aber auch, dass der am Auslassstutzen 28 des Ventilkörpers 12 vorhandene Datenspeicher 30 alle Daten zu Komponenten, die nicht die Ventilmembran 14 sind, speichert.

Wesentlich ist letztlich, dass die Synchronisierung der einzelnen Daten auf einem externen Gerät, nämlich der Verarbeitungseinrichtung 40 erfolgt, wodurch sich eine elektronische Identität des Membranventils 10 ergibt, die beispielsweise wie folgt sein kann:
Membranventil A = Ventilmembran B + Ventilantrieb C + Ventilkörper D zum Zeitpunkt E, zusammengebaut am F von G, wobei die Ventilmembran B hergestellt wurde am H durch I, usw..

Dadurch, dass die Ventilmembran 14 mit einem Datenspeicher 24 versehen ist, kann die Sicherheit im Wartungsfalle erheblich verbessert werden. Es kann nämlich beispielsweise erkannt werden, ob bei einem Austausch der Ventilmembran 14 die richtige Ventilmembran 14 in das Membranventil 10 eingebaut wurde, oder ob beispielsweise aus Versehen die alte und verschlissene Ventilmembran 14 wieder in das Membranventil 10 eingebaut wurde. Auch bietet der Datenspeicher 24 der Ventilmembran 14 zusammen mit den weiteren verknüpften bzw. synchronisierten Daten die Möglichkeit zur Realisierung eines Plagiatsschutzes. Dies ist insbesondere dann möglich, wenn die Daten auf dem Datenspeicher 24 der Ventilmembran 14 entsprechend verschlüsselt und/oder ein individueller und nicht fälschbarer Identifizierungscode für jede individuelle Ventilmembran 14 abgespeichert wird.

Durch die synchronisierten Daten wird eine lückenlose elektronische Lebenslaufakte des Membranventils 10 geschaffen, die im Rahmen der Qualitätssicherung des Betriebs der verfahrenstechnischen Anlage 32 nutzbar und äußerst schnell abrufbar ist, um Haftungsrisiken für den Betreiber der verfahrenstechnischen Anlage 32 zu reduzieren. Gegebenenfalls ist am Beispiel einer Ventilmembran 14 eine Rückverfolgung bis zu deren Herstellung, den zur Herstellung verwendeten Rohstoffen, etc. möglich.

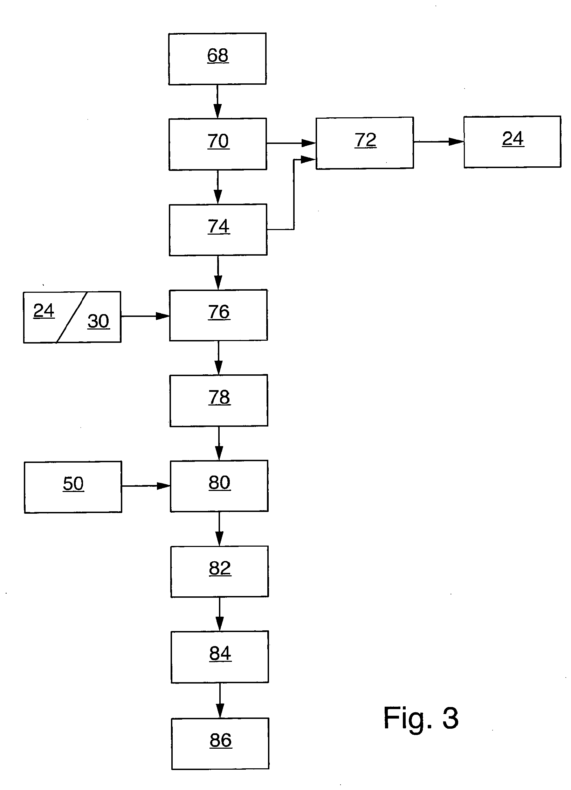

Ein Verfahren zum Betreiben des Membranventils 10 wird nun unter Bezugnahme auf Figur 3 erläutert: nach einem Startblock 68 wird in einem Block 70 bei einem Initialisieren des Ventilantriebs 20 eine aktuelle Membrandicke der Ventilmembran 14 ermittelt und in einem Block 72 zusammen mit dem Zeitpunkt der Ermittlung in den Datenspeicher 24 eingespeichert. In einem Block 74 wird im Rahmen einer Wartung mithilfe einer Sichtinspektion der Zustand der Ventilmembran 14 beurteilt und als entsprechender Code ebenfalls im Datenspeicher 24 abgespeichert.

In einem Block 76 werden die in den Datenspeichern 24 und 30 abgespeicherten Daten ausgelesen. In 78 werden die ausgelesenen Daten an die Verarbeitungseinrichtung 40 mittels der Übermittlungseinrichtung 38 drahtlos übermittelt. In einem Block 80 werden die übermittelten Daten mit den aus dem Datenspeicher 50 ausgelesenen Daten synchronisiert und die synchronisierten Daten verarbeitet. Abhängig vom Ergebnis der Verarbeitung im Block 80 werden im Block 82 Aktionen ermittelt, und im Block 84 werden die ermittelten Aktionen ausgeführt. Das Verfahren endet in 86.

## Patentansprüche

1. Verfahren zum Betreiben eines Membranventils (10), welches das Auslesen (76) von Daten, welche mindestens eine Eigenschaft einer Ventilmembran (14) des Membranventils (10) charakterisieren, aus mindestens einem in das Membranventil (10) integrierten Datenspeicher (24) mittels einer Ausleseeinrichtung (36) umfasst, **dadurch gekennzeichnet, dass** das Verfahren ferner umfasst:
a. Übermitteln (78) der ausgelesenen Daten an eine entfernt von der Ausleseeinrichtung (36) und vom Membranventil (10) angeordnete Verarbeitungseinrichtung (40);
b. Synchronisieren (80) der übermittelten Daten mit bei der Verarbeitungseinrichtung (40) vorhandenen Daten;
wobei die bei der Verarbeitungseinrichtung (40) vorhandenen Daten mindestens eine Eigenschaft der Ventilmembran (14) des Membranventils (10) und/oder mindestens eine Eigenschaft einer Komponente des Membranventils (10), die nicht die Ventilmembran (14) ist, und/oder mindestens eine Eigenschaft des Membranventils (10) charakterisieren.

2. Verfahren nach Anspruch 1, **dadurch gekennzeichnet, dass** im Schritt a die Daten an eine bei dem Hersteller (44) oder Lieferanten des Membranventils (10) vorhandene Verarbeitungseinrichtung (40) übermittelt werden.

3. Verfahren nach einem der vorhergehenden Ansprüche, **dadurch gekennzeichnet, dass** die Daten mittels einer mobilen Ausleseeinrichtung (36), insbesondere mittels eines Smartphones, Tablet PCs oder Smart Tablets, ausgelesen werden.

4. Verfahren nach einem der vorhergehenden Ansprüche, **dadurch gekennzeichnet, dass** die Daten drahtlos ausgelesen werden.

5. Verfahren nach einem der vorhergehenden Ansprüche, **dadurch gekennzeichnet, dass** aus dem integrierten Datenspeicher (24) auch Daten ausgelesen werden, welche mindestens eine Eigenschaft einer Komponente, die nicht die Ventilmembran (14) ist, und/oder eine Betriebseigenschaft des Membranventils (10) charakterisieren.

6. Verfahren nach einem der vorhergehenden Ansprüche, **dadurch gekennzeichnet, dass** die Daten, welche mindestens eine Eigenschaft der Ventilmembran (14) des Membranventils (10) und/oder mindestens eine Eigenschaft der Komponente des Membranventils (10), die nicht die Ventilmembran (14) ist, und/oder mindestens eine Eigenschaft des Membranventils (10) charakterisieren, mindestens ein Datum aus der folgenden Gruppe umfassen: Typ, Material, Ventilantrieb, Herstellungsdatum, Herstellungsort, Herstellungscharge, Qualitätsprüfgrößen, Lieferant, Lieferweg, Lagerort, Lagerdauer, Einlagerdatum, Auslagerdatum, Einbaudatum, Einbauort, Name des Monteurs, Name des Betreibers.

7. Verfahren nach einem der Ansprüche 5 oder 6, **dadurch gekennzeichnet, dass** die Daten, welche eine Betriebseigenschaft des Membranventils (10) charakterisieren, ein Datum aus der folgenden Gruppe umfassen: Fluidtyp, Fluiddruck, Fluidtemperatur, Anzahl der Schaltzyklen, Betriebszeit.

8. Verfahren nach einem der vorhergehenden Ansprüche, **dadurch gekennzeichnet, dass** bei einem Initialisieren (70) eines Ventilantriebs (20) eine aktuelle Membrandicke ermittelt und zusammen mit dem Ermittlungsdatum auf dem Datenspeicher (24) gespeichert wird und/oder an die Verarbeitungseinrichtung (40) übermittelt wird.

9. Verfahren nach einem der vorhergehenden Ansprüche, **dadurch gekennzeichnet, dass** bei einer Wartung (74) des Membranventils (10) mindestens eine den aktuellen Zustand der Ventilmembran (14) charakterisierende Größe ermittelt und auf dem Datenspeicher (24) gespeichert und/oder an die Verarbeitungseinrichtung (40) übermittelt wird.

10. Verfahren nach einem der vorhergehenden Ansprüche, **dadurch gekennzeichnet, dass** es ferner folgende Schritte umfasst:
c. Verarbeiten (80) der synchronisierten Daten in der Verarbeitungseinrichtung (40);
d. Ermitteln (82) einer Aktion durch die Verarbeitungseinrichtung (40) abhängig vom Ergebnis der Verarbeitung.

11. Verfahren nach Anspruch 10, **dadurch gekennzeichnet, dass** die Verarbeitungseinrichtung (40) im Schritt c einen wahrscheinlichen Verschleißzustand, insbesondere der Ventilmembran (14), ermittelt.

12. Verfahren nach einem der Ansprüche 10-11, **dadurch gekennzeichnet, dass** die Aktion im Schritt d mindestens eine Aktion aus der folgenden Gruppe umfasst: automatisches Erstellen und/oder Übermitteln einer Statusinformation, automatisches Erstellen und/oder Übermitteln einer Ersatzteilanforderung, automatisches Erstellen und/oder Übermitteln einer Warninformation.

13. Verfahren nach Anspruch 12, **dadurch gekennzeichnet, dass** die Statusinformation und/oder die Warninformation an die Ausleseeinrichtung (36) übermittelt und dort angezeigt werden/wird.

14. Verfahren nach einem der Ansprüche 12 oder 13, **dadurch gekennzeichnet, dass** die Statusinformation eine wahrscheinliche Restlaufzeit und/oder die Warninformation einen Hinweis auf ein drohendes Ventilversagen umfasst.

15. System (34), welches umfasst: ein Membranventil (10) mit mindestens einem in das Membranventil (10) integrierten Datenspeicher (24); eine Ausleseeinrichtung (36) zum Auslesen von auf dem Datenspeicher (24) gespeicherten Daten; eine Übermittlungseinrichtung (38) zum Übermitteln der ausgelesenen Daten an eine entfernt von der Ausleseeinrichtung (36) und von dem Membranventil (10) angeordnete Verarbeitungseinrichtung (40); wobei der Datenspeicher (24), die Ausleseeinrichtung (36), die Übermittlungseinrichtung (38) und die Verarbeitungseinrichtung (40) zur Durchführung eines Verfahrens nach einem der vorhergehenden Ansprüche eingerichtet und programmiert sind, so dass mittels der Übermittlungseinrichtung (38) übermittelte Daten mit bei der Verarbeitungseinrichtung (40) vorhandenen Daten synchronisiert werden, wobei die bei der Verarbeitungseinrichtung (40) vorhandenen Daten mindestens eine Eigenschaft der Ventilmembran (14) des Membranventils (10) und/oder mindestens eine Eigenschaft einer Komponente des Membranventils (10), die nicht die Ventilmembran (14) ist, und/oder mindestens eine Eigenschaft des Membranventils (10) charakterisieren.

16. Ausleseeinrichtung (36) zum Auslesen von auf einem Datenspeicher (24) gespeicherten Daten, **dadurch gekennzeichnet, dass** sie zur Durchführung eines Verfahrens nach einem der vorhergehenden Ansprüche eingerichtet und programmiert ist.

## Claims

1. Method of operating a diaphragm valve (10) which comprises the reading (76) of data which is characteristic of at least one property of a diaphragm (14) of the diaphragm valve (10), from at least one data memory (24) incorporated in the diaphragm valve (10), by means of a reading device (36), **characterised in that** the method also comprises:
a. transmission (78) of the data which is read to a processing means (40) arranged remotely from the reading device (36) and from the diaphragm valve (10),
b. synchronisation (80) of the data transmitted with data present in the processing means (40),
the data present in the processing means (40) being characteristic of at least one property of the diaphragm (14) of the diaphragm valve (10), and/or of at least one property of a component of the diaphragm valve (10) which is not the diaphragm (14), and/or of at least one property of the diaphragm valve (10).

2. Method according to claim 1, **characterised in that**, in step a, the data is transmitted to a processing means (40) present at the manufacturer (44) or supplier of the diaphragm valve (10).

3. Method according to one of the preceding claims, **characterised in that** the data is read by means of a mobile reading device (36), and in particular by means of a smartphone, tablet PC or smart tablet.

4. Method according to one of the preceding claims, **characterised in that** the data is read wirelessly.

5. Method according to one of the preceding claims, **characterised in that** there is also read from the incorporated data memory (24) data which is characteristic of at least one property of a component which is not the valve diaphragm (14) and/or of a property relating to the operation of the diaphragm valve (10).

6. Method according to one of the preceding claims, **characterised in that** the data which is characteristic of at least one property of the diaphragm (14) of the diaphragm valve (10), and/or of at least one property of the component of the diaphragm valve (10) which is not the diaphragm (14), and/or of at least one property of the diaphragm valve (10) comprises at least one item of data from the following group: type, material, valve actuator, date of production, place of production, production batch, quality testing parameters, supplier, supply route, place of storage, period of storage, date into store, date out of store, date of fitting, place of fitting, name of fitter, name of operator.

7. Method according to either of claims 5 and 6, **characterised in that** the data which is characteristic of a property relating to the operation of the diaphragm valve (10) comprises an item of data from the following group: fluid type, fluid pressure, fluid temperature, number of switchovers, time in operation.

8. Method according to one of the preceding claims, **characterised in that**, at the time of an initialisation (70) of a valve actuator (20), a current thickness of the diaphragm is determined and, together with the date of determination, is stored in the data memory (24) and/or is transmitted to the processing means (40).

9. Method according to one of the preceding claims, **characterised in that**, at the time of a maintenance operation (74) on the diaphragm valve (10), at least one parameter characteristic of the current state of the valve diaphragm (14) is determined and is stored in the data memory (24) and/or is transmitted to the processing means (40).

10. Method according to one of the preceding claims, **characterised in that** it also comprises the following steps:
c. processing (80) of the synchronised date in the processing means (40);
d. determination (82) by the processing means (40) of an action, as a function of the result of the processing.

11. Method according to claim 10, **characterised in that**, in step c, the processing means (40) determines a probable state of wear, in particular of the valve diaphragm (14).

12. Method according to either of claims 10 and 11, **characterised in that** the action in step d comprises at least one action from the following group: automatic generation and/or transmission of an item of status information, automatic generation and/or transmission of a spare parts request, automatic generation and/or transmission of an item of warning information.

13. Method according to claim 12, **characterised in that** the item of status information and/or the item of warning information are/is transmitted to the reading device (36) and are/is displayed there.

14. Method according to either of claims 12 and 13, **characterised in that** the item of status information comprises a probable remaining life and/or the item of warning information comprises an indication of a threat of valve failure.

15. System (34) which comprises: a diaphragm valve (10) having at least one data memory (24) incorporated in the diaphragm valve (10), a reading device (36) for reading data stored in the data memory (24), a transmission means (38) for transmitting the data read to a processing means (40) arranged remotely from the reading device (36) and from the diaphragm valve (10), the data memory (24), the reading device (36), the transmission means (38) and the processing means (40) being adapted and programmed to carry out a method according to one of the preceding claims, so that data transmitted by means of the transmission means (38) is synchronised with data present in the processing means (40), the data present in the processing means (40) being characteristic of at least one property of the diaphragm (14) of the diaphragm valve (10), and/or of at least one property of a component of the diaphragm valve (10) which is not the valve diaphragm (14), and/or of at least one property of the diaphragm valve (10).

16. Reading device (36) for reading data stored in a data memory (24), **characterised in that** it is adapted and programmed to carry out a method according to one of the preceding claims.

## Revendications

1. Méthode pour faire fonctionner une vanne à membrane (10), qui comprend la lecture (76) de données, qui caractérisent au moins une caractéristique d'une membrane de vanne (14) de la vanne à membrane (10), à partir d'au moins une mémoire de données (24) intégrée dans la vanne à membrane (10) au moyen d'un dispositif de lecture (36), **caractérisée en ce que** la méthode comprend en outre les étapes consistant à:
a. transmettre (78) les données lues à un dispositif de traitement (40) agencé à distance du dispositif de lecture (36) et de la vanne à membrane (10);
b. synchroniser (80) les données transmises avec des données présentes sur le dispositif de traitement (40) ;
dans laquelle les données présentes sur le dispositif de traitement (40) caractérisent au moins une caractéristique de la membrane de vanne (14) de la vanne à membrane (10) et/ou au moins une caractéristique d'un composant de la vanne à membrane (10), qui n'est pas la membrane de vanne (14), et/ou au moins une caractéristique de la vanne à membrane (10).

2. Méthode selon la revendication 1, **caractérisée en ce qu'**à l'étape a, les données sont transmises à un dispositif de traitement (40) présent chez le fabricant (44) ou le fournisseur de la vanne à membrane (10).

3. Méthode selon l'une des revendications précédentes, **caractérisée en ce que** les données sont lues au moyen d'un dispositif de lecture mobile (36), en particulier au moyen d'un smartphone, d'une tablette numérique ou d'une tablette intelligente.

4. Méthode selon l'une des revendications précédentes, **caractérisée en ce que** les données sont lues sans fil.

5. Méthode selon l'une des revendications précédentes, **caractérisée en ce que** des données provenant de la mémoire de données intégrée (24) sont également lues, qui caractérisent au moins une caractéristique d'un composant, qui n'est pas la membrane de vanne (14), et/ou une caractéristique de fonctionnement de la vanne à membrane (10).

6. Méthode selon l'une des revendications précédentes, **caractérisée en ce que** les données, qui caractérisent au moins une caractéristique de la membrane de vanne (14) de la vanne à membrane (10) et/ou au moins une caractéristique du composant de la vanne à membrane (10), qui n'est pas la membrane de vanne (14), et/ou au moins une caractéristique de la vanne à membrane (10), comprennent au moins une donnée du groupe suivant: type, matériau, commande de vanne, date de fabrication, lieu de fabrication, lot de fabrication, valeurs de contrôle qualité, fournisseur, itinéraire de livraison, lieu de stockage, durée de stockage, date de dépôt, date de sortie, date d'installation, lieu d'installation, nom de l'installateur, nom de l'opérateur.

7. Méthode selon l'une des revendications 5 ou 6, **caractérisée en ce que** les données, qui caractérisent une caractéristique de fonctionnement de la vanne à membrane (10) comprennent une donnée du groupe suivant: type de fluide, pression de fluide, température de fluide, nombre de cycles de commutation, temps de fonctionnement.

8. Méthode selon l'une des revendications précédentes, **caractérisée en ce que** lors d'une initialisation (70) d'une commande de vanne (20), une épaisseur de membrane actuelle est déterminée et enregistrée en même temps que la date de détermination dans la mémoire de données (24) et/ou est transmise au dispositif de traitement (40).

9. Méthode selon l'une des revendications précédentes, **caractérisée en ce que** lors d'un entretien (74) de la vanne à membrane (10), au moins une valeur caractérisant l'état actuel de la membrane de vanne (14) est déterminée et enregistrée dans la mémoire de données (24) et/ou est transmise au dispositif de traitement (40).

10. Méthode selon l'une des revendications précédentes, **caractérisée en ce qu'**elle comprend en outre les étapes suivantes consistant à:
c. traiter (80) les données synchronisées dans le dispositif de traitement (40);
d. déterminer (82) une action du dispositif de traitement (40) en fonction du résultat du traitement.

11. Méthode selon la revendication 10, **caractérisée en ce que** le dispositif de traitement (40), à l'étape c, détermine un état d'usure probable, en particulier de la membrane de vanne (14).

12. Méthode selon l'une des revendications 10 à 11, **caractérisée en ce que** l'action, à l'étape d, comprend au moins une action du groupe suivant: création et/ou transmission automatique d'une information d'état, création et/ou transmission automatique d'une demande de pièce de rechange, création et/ou transmission automatique d'une information d'avertissement.

13. Méthode selon la revendication 12, **caractérisée en ce que** l'information d'état et/ou l'information d'avertissement est/sont transmise(s) au dispositif de lecture (36) et y est/sont affichée(s).

14. Méthode selon l'une des revendications 12 ou 13, **caractérisée en ce que** l'information d'état comprend une durée de vie résiduelle probable et/ou l'information d'avertissement comprend une indication de défaillance de vanne imminente.

15. Système (34) qui comprend: une vanne à membrane (10) avec au moins une mémoire de données (24) intégrée dans la vanne à membrane (10); un dispositif de lecture (36) pour lire des données enregistrées dans la mémoire de données (24); un dispositif de transmission (38) pour transmettre les données lues à un dispositif de traitement (40) agencé à distance du dispositif de lecture (36) et de la vanne à membrane (10); dans lequel la mémoire de données (24), le dispositif de lecture (36), le dispositif de transmission (38) et le dispositif de traitement (40) sont configurés et programmés pour mettre en oeuvre une méthode selon l'une des revendications précédentes, de sorte que des données transmises au moyen du dispositif de transmission (38) sont synchronisées avec des données présentes sur le dispositif de traitement (40), dans lequel les données présentes sur le dispositif de traitement (40) caractérisent au moins une caractéristique de la membrane de vanne (14) de la vanne à membrane (10) et/ou au moins une caractéristique d'un composant de la vanne à membrane (10), qui n'est pas la membrane de vanne (14), et/ou au moins une caractéristique de la vanne à membrane (10).

16. Dispositif de lecture (36) pour lire des données enregistrées dans une mémoire de données (24), **caractérisé en ce qu'**il est configuré et programmé pour mettre en oeuvre une méthode selon l'une des revendications précédentes.
